# EUROPÄISCHE PATENTSCHRIFT

(11) **EP 3 519 907 B1**
(45) Veröffentlichungstag und Bekanntmachung des Hinweises auf die Patenterteilung: **11.12.2019**
(21) Anmeldenummer: 18711524.1
(22) Anmeldetag: 13.03.2018
(51) Int. Cl.: G05D 7/01, G05D 7/00

(54) **DURCHFLUSSMENGENREGLER**
FLOW RATE CONTROLLER
RÉGULATEUR DE DÉBIT

(30) Priorität: 13.03.2017 DE 202017101427 U
(43) Veröffentlichungstag der Anmeldung: 07.08.2019
(73) Patentinhaber: Neoperl GmbH, 79379 Müllheim (DE)
(72) Erfinder: HART, Keith, Welland Worcestershire WR13 6NE (GB)
(74) Vertreter: Mertzlufft-Paufler, Cornelius
(86) Internationale Anmeldenummer: PCT/EP2018/056222
(87) Internationale Veröffentlichungsnummer: WO 2018/167051

(56) Entgegenhaltungen:
- WO-A1-2013/008199
- WO-A2-2015/069114
- US-A- 2 960 109
- US-A1- 2016 010 759

## Beschreibung

Die Erfindung betrifft einen Durchflussmengenregler, mit einem scheibenförmigen, deformierbaren Regelkörper, der anströmseitig zu einem Grundkörper angeordnet ist, so dass zwischen dem Regelkörper und dem Grundkörper ein Steuerspalt gebildet ist, wobei in dem Grundkörper wenigstens eine, dem Steuerspalt nachgeschaltete Abflussöffnung ausgebildet ist, wobei eine lichte Weite des Steuerspalts zumindest im Betrieb durch wenigstens ein Abstützelement vorgegeben ist.

Derartige Mengenregler sind bekannt und werden eingesetzt, um eine konstante Flussrate über einen großen Druckbereich einzustellen.

Aus der WO 2015/069114 A2 ist ein Durchflussmengenregler mit einem scheibenförmigen, deformierbaren Regelkörper bekannt, der anströmseitig zu einem Grundkörper angeordnet ist, so dass zwischen dem Regelkörper und dem Grundkörper ein Steuerspalt gebildet ist, wobei in dem Grundkörper wenigstens eine, dem Steuerspalt nachgeschaltete Abflussöffnung ausgebildet ist, wobei eine lichte Weite des Steuerspalts zumindest im Betrieb durch wenigstens ein Abstützelement vorgegeben ist.

Aus der WO 2013/008199 A1 ist ein Durchflussmengenregler bekannt, bei welchem eine Höhe und eine Breite eines Ventilsitzes und eine Höhe eines Trägerelementes nicht verstellbar ausgebildet sind.

Hierbei verformt sich der Regelkörper druckabhängig und verschließt den Steuerspalt so, dass insgesamt über einen Regelbereich des Drucks eine konstante Durchflussmenge (üblicherweise immer bezogen auf eine Zeiteinheit) eingestellt ist.

Es ist üblich, mehrere Abstützelemente gemeinsam mit dem Grundkörper als Spritzgussteil herzustellen. Die gewünschte Durchflussmenge ist hierbei durch Anordnung und Dimensionierung der Abstützelemente vorgebbar. Soll die Durchflussmenge für einen neu zu fertigenden Durchflussmengenregler abweichend eingestellt werden, so muss die Spritzgussform verändert werden.

Der Erfindung liegt die Aufgabe zugrunde, ein bestehendes Durchflussmengenregler-Design einfach an Kundenanforderungen anpassen zu können.

Zur Lösung der Aufgabe sind die Merkmale von Anspruch 1 vorgesehen. Insbesondere wird somit bei einem Durchflussmengenregler der eingangs beschriebenen Art erfindungsgemäß zur Lösung der Aufgabe vorgeschlagen, dass das wenigstens eine Abstützelement relativ zu dem Grundkörper beweglich angeordnet ist. Die Erfindung ermöglicht somit, die Lage der Abstützelemente in Bezug auf den Grundkörper nach der Fertigung des Durchflussmengenreglers zu verändern. Dies kann beispielsweise günstig sein, um eine neue Kundenanforderung in Bezug auf eine einzustellende Durchflussmenge zu erfüllen oder auch, um Fertigungstoleranzen ausgleichen zu können. Eine Veränderung der Spritzgusswerkzeuge ist nicht mehr erforderlich, sodass eine Anpassung der zu fertigenden Durchflussmengenregler einfach, preiswert und schnell durchführbar ist.

Bei einer Ausgestaltung der Erfindung kann vorgesehen sein, dass das Abstützelement relativ zu dem Grundkörper in eine Position bewegbar ist, in welcher der Regelkörper die Abflussöffnung verschließt. Somit ist ein Durchflussmengenregler bildbar, der eine Stopp- und/oder Verschlussfunktion realisiert. Es ist somit - zusätzlich zu den oben beschriebenen Einstellmöglichkeiten - eine Durchflussmenge Null einstellbar.

Alternativ oder zusätzlich kann vorgesehen sein, dass das Abstützelement relativ zu dem Grundkörper in eine Position bewegbar ist, in welcher der Regelkörper flächig an dem Grundkörper anliegt. Somit ist ein definierter Sitz des Regelkörpers erreichbar. Besonders günstig ist es, wenn der Regelkörper in seiner flächig anliegenden Position die Abflussöffnung verschließt. Somit ist eine sicher schließende Verschlussfunktion erreichbar. Das flächige Anliegen kann hierbei durch einen entsprechend ausgebildeten Auflagebereich, beispielsweise einen eben ausgebildeten Auflagebereich, an dem Grundkörper ermöglicht sein.

Bei einer Ausgestaltung der Erfindung kann vorgesehen sein, dass der Grundkörper auf einer den Steuerspalt begrenzenden Anströmseite im Wesentlichen eben ausgebildet ist. Somit ist eine hindernisfreie Strömung im Steuerspalt jenseits des wenigstens einen Abstützelements erreichbar. Dies ermöglicht eine noch genauere Vorgabe eines Regelverhaltens durch die Abstützelemente.

Bei einer Ausgestaltung der Erfindung kann vorgesehen sein, dass der Regelkörper eine Außenkontur einer Kreisscheibe aufweist. Somit sind Platzverhältnisse in einem den Durchflussmengenregler aufnehmenden Rohr gut ausnutzbar. Bevorzugt ist der Steuerspalt an der Außenkontur, also radial nach außen, geöffnet, so dass Wasser über einen großen Öffnungsquerschnitt einströmen kann.

Der Regelkörper kann - beispielsweise zu seiner Befestigung - eine Zentralöffnung aufweisen.

Eine derartige Zentralöffnung kann in dieser oder in einer alternativen Ausgestaltung für den zusätzlichen oder ausschließlichen Zufluss in den Steuerspalt dienen. In diesem Fall kann der Regelkörper auch an seiner Außenkontur befestigt, aufgelegt und/oder abgedichtet sein.

Besonders günstig ist es hierbei, wenn das wenigstens eine Abstützelement, insbesondere zumindest alle beweglichen Abstützelemente, entlang eines Umfangs angeordnet ist/sind. Somit ist eine Abfolge von Abstützelementen in Umfangsrichtung bildbar. Die Abstützelemente der Abfolge können hierbei funktionell und/oder konstruktiv gleichartig oder sogar identisch ausgebildet sein. Einzelne oder alle Beschreibungen des wenigstens einen Abstützelements können daher bei vorteilhaften Ausgestaltungen auf ausgewählte oder alle Abstützelemente zutreffen.

Bei einer Ausgestaltung der Erfindung kann vorgesehen sein, dass der Regelkörper eine einheitliche Dicke aufweist. Somit ist der Regelkörper aus einem Platten- oder Folienmaterial herstellbar. Von Vorteil ist außerdem, dass der Regelkörper, insbesondere wenn er rotationssymmetrisch ausgebildet ist, in jeder Orientierung betreibbar ist. Somit ist die Montage vereinfacht, da eine Kontrolle einer richtigen Orientierung des Einbaus verzichtbar ist.

Ein besonders gutes Regelverhalten konnte mit einem Regelkörper aus einem elastischen Material, beispielsweise aus Gummi, erreicht werden. Die Scheibenform hat hier den Vorteil, dass der Regelkörper einfach gestanzt oder zugeschnitten werden kann.

Allgemein kann gesagt werden, dass der Regelkörper mindestens im Betrieb, also bei einer Druckbeaufschlagung durch eine Wasserströmung, auf dem wenigstens einen Abstützelement aufliegt. Das wenigstens eine Abstützelement bildet somit einen Auflagepunkt des Regelkörpers. In einem wasserlosen Ruhezustand kann der Regelkörper auch so angeordnet sein, dass er über dem wenigstens einen Abstützelement schwebt oder allgemeiner von diesem beabstandet ist.

Bei einer Ausgestaltung der Erfindung kann vorgesehen sein, dass durch ein Bewegen des wenigstens einen Abstützelements die lichte Weite des Steuerspaltes veränderlich ist. Somit ist eine Durchflussmenge, auf die der Durchflussmengenregler innerhalb seines Arbeitsbereichs begrenzt, leicht einstellbar. Eine höhere lichte Weite bedingt eine größere Durchflussmenge, während eine geringere lichte Weite eine niedrigere Durchflussmenge ergibt.

Bei einer Ausgestaltung der Erfindung kann vorgesehen sein, dass das wenigstens eine Abstützelement in dem Grundkörper geführt ist. Es ist somit eine definierte Beweglichkeit erreichbar, die eine einfache Einstellbarkeit des Regelverhaltens - insbesondere auch im wasserdurchströmten Betrieb - ermöglicht.

Vorzugsweise ist das wenigstens eine Abstützelement transversal zu einer dem Steuerspalt zugewandten Anströmseite des Grundkörpers beweglich angeordnet. Somit kann das wenigstens eine Abstützelement einfach aus dem Grundkörper herausgefahren und in diesen hineingefahren werden, um den Steuerspalt zu vergrößern beziehungsweise zu verkleinern.

Bei einer Ausgestaltung der Erfindung kann vorgesehen sein, dass das wenigstens eine Abstützelement stiftförmig ausgebildet ist. Somit ist ein möglichst kleiner Bauraum für das wenigstens eine Abstützelement im Steuerspalt ausbildbar und es ist ein möglichst großer Raum im Steuerspalt für die Wasserströmung freihaltbar. Es ist außerdem eine einfach fertigbare Form des wenigstens einen Abstützelements beschrieben. Eine Stiftform kann beispielsweise durch einen gleichbleibenden Querschnitt längs zu einer Längserstreckung charakterisierbar sein. Die Querschnittsform kann beispielsweise kreisförmig, oval, polygonal, sternförmig oder als sonstige Freiform ausgebildet sein. Eine Stiftform mit gerundetem oder rundem Querschnitt hat den Vorteil, dass eine möglichst geringe Störung einer Strömung im Steuerspalt erreichbar ist. Eine Stiftform mit einem unrunden Querschnitt kann beispielsweise eine zusätzliche, insbesondere verdrehsichere, Führung des Abstützelements ermöglichen.

Bei einer Ausgestaltung der Erfindung kann vorgesehen sein, dass das wenigstens eine Abstützelement einen kleineren Durchmesser und einen größeren Durchmesser aufweist. Es sind somit beispielsweise unterschiedliche Stabilitätsbereiche ausbildbar, insbesondere zu einer Materialersparnis in weniger beanspruchten Bereichen. Zwischen den unterschiedlichen Durchmessern kann ein Übergang, beispielsweise eine Schulter oder Stufe oder ein stufenloser Übergang, ausgebildet sein. In dem Übergang kann auch wenigstens ein Abschnitt mit einem konstanten Durchmesser ausgebildet sein, um mehrere Stabilitätsbereiche zu bilden.

Hierbei kann vorgesehen sein, dass ein Führungsloch, in dem das wenigstens eine Abstützelement beweglich angeordnet ist, in einer ersten Position des Abstützelements durch den größeren Durchmesser verschlossen und in einer zweiten Position des Abstützelements durch den kleineren Durchmesser zumindest teilweise freigegeben ist. Von Vorteil ist dabei, dass die Beweglichkeit oder Verstellbarkeit zwischen dem wenigstens einen Abstützelement und dem Grundkörper für eine Zusatzfunktion, nämlich ein Öffnen und Verschließen des beispielsweise als Bypass ausgebildeten Führungslochs, nutzbar ist. Es sind auch Abstützelemente verwendbar, die mehr als zwei unterschiedliche Durchmesser aufweisen. Das Führungsloch kann hierbei mit einem gleichbleibenden Innendurchmesser oder korrespondierend gestuft oder mit einem korrespondierenden Übergang, beispielsweise konisch, ausgebildet sein. In dem Übergang des Abstützelements und/oder des Führungslochs kann auch wenigstens ein Abschnitt mit einem konstanten Durchmesser ausgebildet sein, beispielsweise um zusätzliche Schaltfunktionen zu realisieren.

Bei einer Ausgestaltung der Erfindung kann vorgesehen sein, dass das wenigstens eine Abstützelement zumindest teilweise in dem Steuerspalt angeordnet ist. Somit ist einfach eine minimale lichte Weite des Steuerspalts vorgebbar und einstellbar.

Bei einer Ausgestaltung der Erfindung kann vorgesehen sein, dass an dem Grundkörper wenigstens ein unbeweglicher, in den Steuerspalt ragender Abstandhalter angeordnet ist. Von Vorteil ist dabei, dass eine minimale lichte Weite des Steuerspalts, die bei allen Einstellungen des wenigstens einen Abstützelements nicht unterschreitbar ist, definierbar ist. Es ist somit eine Mindestdurchflussmenge vorgebbar.

Hierbei kann vorgesehen sein, dass ein Maß, mit welchem der wenigstens eine Abstandhalter in den Steuerspalt ragt, kleiner ist als ein kleinstes Maß, mit welcher das wenigstens eine Abstützelement in den Steuerspalt ragt. Es hat sich herausgestellt, dass vergleichsweise kleine feste Abstandhalter besonders dort, wo ein großer Abstand zwischen benachbarten Abstützelementen besteht, zu einer Geräuschreduktion im Betrieb beitragen, vorzugsweise ohne eine wesentliche Veränderung des Regelverhaltens. Der wenigstens eine Abstandhalter ist somit bevorzugt zwischen denjenigen zwei unmittelbar zueinander benachbarten Abstützelementen aus einer, beispielsweise der bereits erwähnten, Abfolge von Abstützelementen angeordnet, die zwischen sich den größten oder zumindest einen vergleichsweise großen Abstand in der Abfolge einschließen.

Bei einer Ausgestaltung der Erfindung sind keine derartigen Abstandhalter vorgesehen. Ist die Beweglichkeit des wenigstens einen Abstützelements derart ausgestaltet, dass sich das wenigstens eine Abstützelement vollständig aus dem Steuerspalt entfernen lässt, so ist ein Verschlussventil ausbildbar, indem der Regelkörper so ausgestaltet und/oder angeordnet ist, dass eine Abflussöffnung - beispielsweise die an anderer Stelle näher beschriebene Abflussöffnung - in dem Grundkörper mit dem Regelkörper beispielsweise in einer Stellung, in welcher der Steuerspalt auf Null reduziert ist, verschließbar oder verschlossen ist.

Bei einer Ausgestaltung der Erfindung kann vorgesehen sein, dass der Regelkörper an einem Trägerelement befestigt ist. Somit ist der Regelkörper gegen ein Herausfallen sicherbar. Das Trägerelement bildet außerdem einen weiteren Auflagepunkt neben dem des wenigstens einen Abstützelements. Die Lage und/oder Gestalt des Regelkörpers ist somit nochmals verbessert in Bezug auf den Grundkörper vorgebbar. Der Steuerspalt ist somit definiert ausbildbar. Vorzugsweise ist der Regelkörper abdichtend befestigt. Somit sind ein freies Ende und ein festes Ende des Regelkörpers gebildet. Dies ist günstig für ein kontrolliertes Verhalten des Regelkörpers zur Durchflussmengenbegrenzung. Beispielsweise kann das freie Ende durch eine Außenkontur - in Bezug auf eine von dem Trägerelement ausgehende Radialrichtung - des Regelkörpers gebildet sein.

Beispielsweise kann das Trägerelement stabförmig ausgebildet sein. Somit ist ein Trägerelement mit geringem Platzbedarf bereitgestellt. Günstig ist es, wenn der Regelkörper mittig an dem Trägerelement befestigt ist, beispielsweise in einer Zentralöffnung des Regelkörpers. Es ist somit eine allseitige Nutzung des Regelkörpers zur Regelung, insbesondere Begrenzung, der Durchflussmenge ermöglicht.

Bei einer Ausgestaltung der Erfindung kann vorgesehen sein, dass das Abstützelement den Regelkörper trägt. Somit ist eine Position des Regelkörpers als Ganzes relativ zu einem Grundkörper veränderbar. Das Abstützelement kann somit hierbei zusätzlich die Funktionen des zuvor beschriebenen Trägerelements übernehmen. Weitere Abstützelemente sind somit verzichtbar, können jedoch - beispielsweise zur Realisierung unterschiedlicher Verstellmöglichkeiten und/oder Verstellgeschwindingkeiten - bei vorteilhaften Ausgestaltungen vorhanden sein.

Bei einer Ausgestaltung der Erfindung kann vorgesehen sein, dass das Trägerelement relativ zu dem Grundkörper beweglich angeordnet ist. Von Vorteil ist dabei, dass ein Befestigungs- oder Auflagepunkt des Regelkörpers, der durch das Trägerelement gegeben ist, relativ zu dem Grundkörper verstellbar ist. Somit ist ein zusätzlicher Freiheitsgrad gebildet, mit welchem das Regelverhalten des Durchflussmengenreglers beeinflussbar ist. Bereits für viele Zwecke ausreichend ist es, wenn das Trägerelement synchron mit den wenigstens einen Abstützelement relativ zu dem Grundkörper beweglich ist.

Alternativ oder zusätzlich kann vorgesehen sein, dass das Trägerelement relativ zu dem wenigstens einen Abstützelement beweglich angeordnet ist. Beispielsweise ist das bereits erreichbar, wenn das Trägerelement unbeweglich an dem Grundkörper angeordnet ist. Besonders günstig ist es jedoch, wenn das Trägerelement, der Grundkörper und das wenigstens eine Abstützelement jeweils unabhängig voneinander und paarweise gegeneinander beweglich angeordnet sind. Dies eröffnet eine große Zahl von Einstellungsmöglichkeiten, um das Regelverhalten und insbesondere eine gewünschte Durchflussmenge zu beeinflussen.

Bei einer Ausgestaltung der Erfindung kann vorgesehen sein, dass eine Koppeleinrichtung zu einem gegenläufigen Bewegen des Trägerelements zu dem wenigstens einen Abstützelement eingerichtet ist. Somit ist beispielsweise das Abstützelement in seiner Mitte absenkbar, während es an seiner Außenkontur angehoben wird und umgekehrt.

Bei einer Ausgestaltung der Erfindung kann vorgesehen sein, dass eine Koppeleinrichtung zu einem gleichläufigen Bewegen des Trägerelements zu dem wenigstens einen Abstützelement eingerichtet ist. Es ist somit auf einfache Weise eine eingestellte Durchflussmenge vergrößerbar - beispielsweise durch ein gemeinsames Entfernen des Regelkörpers an allen Auflagepunkten von dem Grundkörper - oder verringerbar - beispielsweise durch ein gemeinsames Annähern des Regelkörpers an allen Auflagepunkten an den Grundkörper.

Bei einer Ausgestaltung der Erfindung kann vorgesehen sein, dass eine Koppeleinrichtung, beispielsweise die bereits erwähnte Koppeleinrichtung, eine erste Verstellrate des wenigstens einen Abstützelements und eine zweite Verstellrate des Trägerelements bewirkt. Somit sind unterschiedliche Verstellraten für das Abstützelement oder die Abstützelemente einerseits und das Trägerelement andererseits realisierbar. Beispielsweise kann die erste Verstellrate größer als die zweite Verstellrate, insbesondere wenigstens doppelt so groß wie die zweite Verstellrate, sein oder es kann vorgesehen sein, dass die erste Verstellrate kleiner als die zweite Verstellrate, insbesondere höchstens halb so groß wie die zweite Verstellrate, ist. Somit ist der jeweilige Einfluss einer Position des Regelkörpers am Trägerelement und am wenigstens einen Abstützelement auf die Regelkurve unterschiedlich dosierbar.

Bei einer Ausgestaltung der Erfindung kann vorgesehen sein, dass das wenigstens eine Abstützelement mit einem Antrieb relativ zu dem Grundkörper beweglich sind. Somit ist eine einfache Einstellung im Betrieb durchführbar.

Bei einer Ausgestaltung der Erfindung kann vorgesehen sein, dass das Trägerelement mit einem, beispielsweise dem erwähnten, Antrieb relativ zu dem Grundkörper beweglich sind. Dies eröffnet eine zusätzliche Einstellmöglichkeit.

Vorzugsweise ist der Antrieb jeweils mechanisch, beispielsweise über einen Spindeltrieb oder ein Getriebe, elektrisch, beispielsweise über einen Elektromotor, und/oder thermisch, beispielsweise mit einem temperatursensitiven Material, dessen Ausdehnung und/oder Form stark temperaturabhängig ist, wie Thermowachs, antreibbar. Jede Antriebsform hat hierbei ihre eigenen Vorteile: So ist ein mechanisch antreibbarer Antrieb einfach manuell bedienbar, ein elektrisch antreibbarer Antrieb einfach aus der Ferne oder in einem Regelkreis ansteuerbar, ein thermisch antreibbarer Antrieb autark, insbesondere von außen unzugänglich betreibbar, zum Beispiel durch eine Umgebungs- oder Wassertemperatur gesteuert.

Eine konstruktiv einfache Variante kann vorsehen, dass das wenigstens eine Abstützelement und das Trägerelement durch jeweils einen Antrieb in Form eines Spindeltriebs bewegbar sind. Hierbei können die Spindeltriebe konzentrisch zueinander und/oder in einer Parallelschaltung zueinander angeordnet sein. Die Parallelschaltung ermöglicht die gemeinsame Betätigung in einem Vorgang, die konzentrische Anordnung spart Platz. Sind die Spindeltriebe mit unterschiedlichen Steigungen, beispielsweise mit unterschiedlich starken Steigungen und/oder mit unterschiedlichen Drehrichtungen, ausgebildet, so lassen sich unterschiedliche Verstellraten auch bei einer gemeinsamen (manuellen) Betätigung leicht erreichen.

Bei einer Ausgestaltung der Erfindung kann vorgesehen sein, dass das wenigstens eine Abstützelement und/oder das Trägerelement durch den Grundkörper auf eine Abströmseite geführt ist/sind. Somit ist eine Relativbewegung des wenigstens einen Abstützelement und/oder des Trägerelements einerseits und des Grundkörpers andererseits relativ zueinander einfach von der Abströmseite bewirkbar.

Bei einer Ausgestaltung der Erfindung kann vorgesehen sein, dass der Antrieb abströmseitig angeordnet ist. Somit ist ein ungehinderter Zufluss der Wasserströmung in den Steuerspalt erreichbar.

Bei einer Ausgestaltung der Erfindung kann vorgesehen sein, dass das wenigstens eine Abstützelement zu einer Abfolge von Abstützelementen gehört. Es sind somit mehrere Abstützelemente vorhanden, die jeweils (unterschiedliche oder gleichartige) Auflagepunkte des Regelkörpers zur Einstellung oder Vorgabe des Steuerspalts definieren. Beispielsweise können die Abstützelemente voneinander unterschiedliche Höhen über dem Grundkörper definieren. Bevorzugt ist die Abfolge von Abstützelementen in einer Umfangsrichtung des Regelkörpers angeordnet. Somit lassen sich unterschiedliche Punkte des Regelkörpers an dessen Umfang einfach abstützen. Dies ermöglicht eine genaue Einstellung der Regelposition und somit des Regelverhaltens des Regelkörpers.

Insbesondere kann hierbei vorgesehen sein, dass die Abfolge wenigstens zwei voneinander verschiedene Abstände zwischen benachbarten Abstützelementen aufweist. Somit ist ein unterschiedliche Regelverhalten in unterschiedlichen Druckbereichen erreichbar. Es hat sich herausgestellt, dass benachbarte Abstützelemente mit einem großen Abstand voneinander besonders das Regelverhalten bei kleinen Drücken bzw. Druckdifferenzen über dem Durchflussmengenregler bestimmen, während benachbarten Abstützelemente, die eng zusammenstehen und somit einen kleinen Abstand voneinander aufweisen, hauptsächlich das Regelverhalten bei großen Drücken bzw. Druckdifferenzen über dem Durchflussmengenregler vorgeben.

Bei einer Ausgestaltung der Erfindung kann vorgesehen sein, dass die Abstützelemente der Abfolge entlang der Umfangsrichtung ungleichmäßig angeordnet sind. Somit ist der gesamte Umfang ausnutzbar, um ein Regelverhalten in unterschiedlichen Druckbereichen und somit über einen großen gesamten Arbeitsbereich des Duchflussmengenreglers einzustellen. Die Abstände zwischen benachbarten Abstützelementen korrespondieren hierbei jeweils zu einem Teilbereich des Arbeitsbereichs (große Abstände zu einem niedrigen Teilbereich, kleine Abstände zu einem hohen Teilbereich), in dem ein Regelverhalten durch einen Teil des Regelkörpers, der zwischen diese Abstützelementen wirksam ist, eingestellt wird.

Bei einer Ausgestaltung der Erfindung kann vorgesehen sein, dass die Abstützelemente der Abfolge zu einem synchronen Bewegen relativ zu der Grundplatte miteinander gekoppelt sind. Von Vorteil ist dabei, dass eine Soll-Durchflussmenge einfach veränderbar ist, insbesondere verringerbar, indem die lichte Weite des Steuerspalts verkleinert wird, und/oder vergrößerbar, indem die lichte Weite vergrößert wird.

Alternativ oder zusätzlich, insbesondere dann, wenn die Abstützelemente miteinander koppelbar und entkoppelbar sind, kann vorgesehen sein, dass die Abstützelemente der Abfolge individuell beweglich angeordnet sind. Somit können beispielsweise Abstützelemente vollständig versenkt werden, wodurch die zuvor erwähnten Abstände einfach zumindest in Stufen veränderbar sind. Auf diese Weise ist ein Regelverhalten in verschiedenen Druckbereichen einfach veränderbar.

Bei einer Ausgestaltung der Erfindung kann vorgesehen sein, dass eine Wasserströmung im Grundkörper in einer Biegung geführt ist. Somit ist ein Auslass in einem Winkel zu einem Einlass der Wasserströmung anordenbar. Insbesondere kann hierbei vorgesehen sein, dass ein Antrieb, beispielsweise der bereits erwähnte Antrieb, in einer Verlängerung eines einlaufenden Arms der Biegung außerhalb der Wasserströmung angeordnet ist. Somit ist der Antrieb von außen zugänglich oder betätigbar ausgestaltbar und/oder vor Wasser geschützt anwendbar.

Der bereits erwähnte Antrieb kann auch je nach Platzverhältnissen an beliebigen Positionen angeordnet sein, wobei eine vorzugsweise mechanische Kopplung eine Betätigung oder Verstellung des wenigstens einen Abstützelements und/oder des Trägerelements vermitteln kann.

Bei einer Ausgestaltung der Erfindung kann vorgesehen sein, dass in dem Grundkörper eine Abflussöffnung ausgebildet ist. Somit kann die Wasserströmung einfach abfließen. Vorzugsweise ist die Abflussöffnung in einer Strömungsrichtung im Steuerspalt zwischen dem Trägerelement und dem wenigstens einen Abstützelement angeordnet. Somit kann die Wasserströmung einfach durch den Steuerspalt hindurch und aus diesem hinaus fließen.

Bei einer Ausgestaltung der Erfindung kann vorgesehen sein, dass der Grundkörper in einem Rohr mit auf den Grundkörper abgestimmtem Innendurchmesser angeordnet ist. Somit ist der erfindungsgemäße Durchflussmengenregler einfach in ein flüssigkeitsführendes System integrierbar. Vorzugsweise ist der Grundkörper fest in dem Rohr angeordnet, beispielsweise an diesem fixiert. Somit ist eine Abstützung für den Regelkörper bereitstellbar, die zumindest während des Betriebs wirksam ist.

Eine bevorzugte Anwendung der Erfindung kann hierbei eine Verwendung eines erfindungsgemäßen Durchflussmengenreglers, insbesondere wie zuvor beschrieben und/oder nach einem der auf einen Durchflussmengenregler gerichteten Ansprüche, zu einem Einstellen einer Durchflussmenge im Betrieb vorsehen. Somit kann eine einfache Anpassung an einen Anwendungsbedarf im Betrieb erfolgen. Bevorzugt ist hierbei der bereits erwähnte Antrieb für die Relativbewegung zwischen dem wenigstens einen Abstützelement und dem Grundkörper von außen, also beispielsweise von außerhalb eines wasser- oder flüssigkeitsführenden Systems, zugänglich oder betätigbar, insbesondere mit den zuvor beschriebenen Maßnahmen.

Vorzugsweise sieht die Verwendung vor, eine Mischtemperatur, insbesondere ein Mischverhältnis, eines Gemischs aus Kalt- und Warmwasser im Betrieb einzustellen, also insbesondere zu verändern. Durch die einstellbare Durchflussmenge ist hierbei einfach erreichbar, dass eine Mischtemperatur druckunabhängig eingestellt ist.

Die Erfindung wird nun anhand von Ausführungsbeispielen näher beschrieben, ist jedoch nicht auf diese Ausführungsbeispiele beschränkt. Weitere Ausführungsbeispiele ergeben sich durch Kombination der Merkmale einzelner oder mehrerer Unteransprüche untereinander und/oder mit einzelnen oder mehreren Merkmalen der Ausführungsbeispiele.
- Fig. 1: einen erfindungsgemäßen Durchflussmengenregler mit abgenommenem Regelkörper in einer dreidimensionalen Schrägansicht,
- Fig. 2: den Durchflussmengenregler gemäß Fig. 1 mit aufgesetztem Regelkörper in teilweise aufgeschnittener Darstellung,
- Fig. 3: einen Längsschnitt durch den erfindungsgemäßen Durchflussmengenregler gemäß Fig. 2 in einer ersten Position der Abstützelemente,
- Fig. 4: die Längsschnittdarstellung analog Fig. 3, wobei der Regelkörper in einer zweiten, einen engeren Steuerspalt lassenden Position angeordnet ist,
- Fig. 5: einen weiteren erfindungsgemäßen Durchflussmengenregler, wobei das wenigstens eine Abstützelement und das Trägerelement mit unterschiedlichen Verstellraten verstellbar sind,
- Fig. 6: das gemeinsame Verstellen der Abstützelemente und des Trägerelement bei einem weiteren erfindungsgemäßen Durchflussmengenregler mit abgenommenem Regelkörper,
- Fig. 7: das Verstellen nur des Trägerelements bei dem Durchflussmengenregler nach Figur 6,
- Fig. 8: das Verstellen nur der Abstützelemente bei dem Durchflussmengenregler nach Figur 6,
- Fig. 9: einen weiteren erfindungsgemäßen Durchflussmengenregler, bei welchem ein thermodynamischer Antrieb ausgebildet ist,
- Fig. 10: eine Detaildarstellung eines Längsschnitts mit einem gestuft ausgebildeten Abstützelement in einer Offenposition,
- Fig. 11: das Abstützelement aus Fig. 10 in einer entsprechenden Detaildarstellung eines Längsschnitts, wobei das Abstützelement ein Führungsloch verschließt,
- Fig. 12: eine alternative Variante zu Fig. 10,
- Fig. 13: eine alternative Variante zu Fig. 11,
- Fig. 14: eine erste Regelkurve mit einer kleineren Soll-Durchflussmenge,
- Fig. 15: eine zweite Regelkurve mit einer größeren Soll-Durchflussmenge,
- Fig. 16: einen weiteren erfindungsgemäßen Durchflussmengenregler mit abgenommenem Regelkörper und
- Fig. 17: den Durchflussmengenregler aus Fig. 16 in einem Längsschnitt.

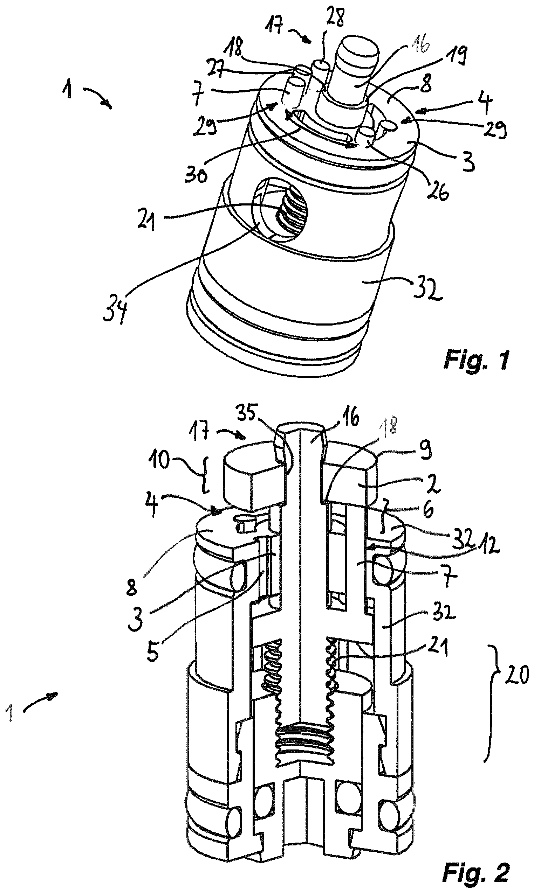

Zunächst werden die Figuren 1 bis 4 gemeinsam beschrieben.

Ein im Ganzen mit 1 bezeichneter Durchflussmengenregler hat einen Regelkörper 2, der scheibenförmig und deformierbar ausgebildet ist.

Der Durchflussmengenregler 1 hat außerdem einen Grundkörper 3, der mit dem Regelkörper 2 einen Steuerspalt 4 einschließt. Hierzu ist der Regelkörper 2 anströmseitig zu dem Grundkörper 3 angeordnet.

In dem Grundkörper 3 ist wenigstens eine Abflussöffnung 5 ausgebildet, die dem Steuerspalt 4 nachgeschaltet ist. Anströmendes Wasser umströmt somit zunächst den Regelkörper 2, dringt in den Steuerspalt 4 ein und fließt über die Abflussöffnung 5 ab.

Der Steuerspalt 4 weist eine lichte Weite 6 auf. Diese lichte Weite 6 ist im Betrieb, also schon bei geringer Druckaufschlagung durch das Wasser, durch wenigstens ein Abstützelement 7 vorgebbar.

Hierbei ist das Abstützelement 7 relativ zu dem Grundkörper 3 verstellbar, sodass durch ein Verstellen des Abstützelements 7 die lichte Weite 6 des Steuerspalts 4 veränderbar ist.

Der Grundkörper 3 ist auf seiner Anströmseite 8, welche den Steuerspalt 4 begrenzt, im Wesentlichen eben ausgebildet. Somit kann die Wasserströmung ungehindert über die Anströmseite 8 des Grundkörpers 3 fließen.

Der Regelkörper 2 hat eine umlaufende Außenkontur 9, die die Form einer Kreisscheibe beschreibt.

Aus Figur 2 ist weiter ersichtlich, dass der Regelkörper 2 mit einer einheitlichen Dicke 10 gefertigt ist. Der Regelkörper 2 ist aus Gummi und daher elastisch deformierbar.

In noch genauer zu beschreibender Weise ist das Abstützelement 7 relativ zu dem Grundkörper 3 beweglich oder verstellbar.

Durch dieses Bewegen des Abstützelements 7 ist ein Überstand 11 des Abstützelements 7 über den Grundkörper 3 hinaus veränderbar. Hieraus ergibt sich, dass der Regelkörper 2 über den Grundkörper 3 durch ein Bewegen des Abstützelements 7 absenkbar oder anhebbar ist, wodurch sich der Steuerspalt 4 verkleinert oder vergrößert.

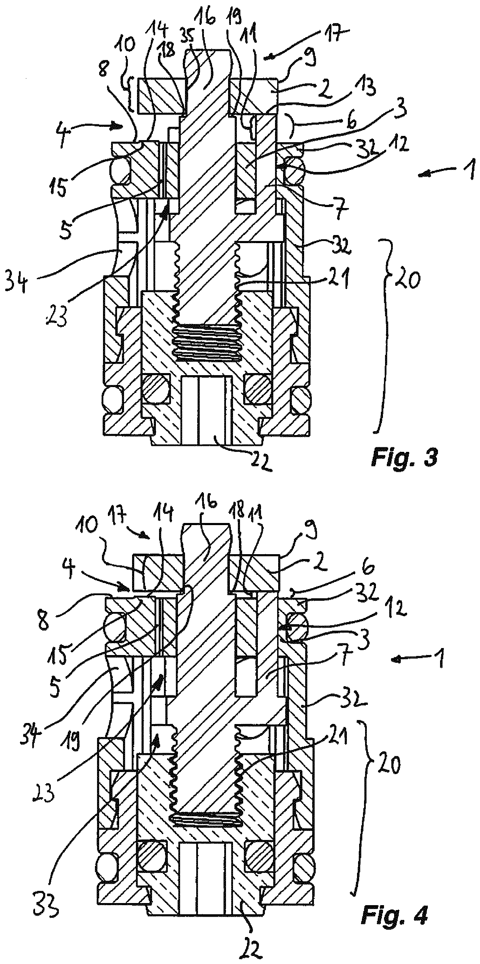

Dies ist durch Vergleich der Figuren 3 und 4 erkennbar: Während Figur 3 einen großen Steuerspalt 4 zeigt, weist die Anordnung gemäß Figur 4 einen kleinen Steuerspalt 4 auf. Zur Überführung des Durchflussmengenreglers 1 von der Situation gemäß Figur 3 zu der Situation gemäß Figur 4 wurde das wenigstens eine Abstützelement 7 in den Grundkörper 3 hineingefahren.

Hieraus ergibt sich ein unterschiedliches Regelverhalten des Durchflussmengenreglers 1. Bei der Anordnung gemäß Figur 3, also bei einer Anordnung mit einem Steuerspalt 4 mit vergleichsweiser großer lichter Weite 6, fließt eine vergleichsweise große Durchflussmenge (pro Zeiteinheit), während bei einer Anordnung gemäß Figur 4, also bei einem Steuerspalt 4 mit vergleichsweise kleiner lichter Weite 6, eine kleine Durchflussmenge fließt.

Genauer bewirkt eine Druckdifferenz über den Durchflussmengenregler 1 gemäß dem allgemeinen Wirkprinzip, dass der Regelkörper 2 mehr oder weniger verformt, sodass bei hohen Druckdifferenzen ein Steuerspalt 4 ausbildet, dessen lichte Weite 6 gegenüber den in Figur 3 bzw. Figur 4 gezeigten Ruhelagen deutlich stärker verengt ist, als dies bei niedrigeren Druckdifferenzen der Fall ist.

Auf diese Weise kann erreicht werden, dass die eingestellte Durchflussmenge über einen weiten Druckbereich konstant ist.

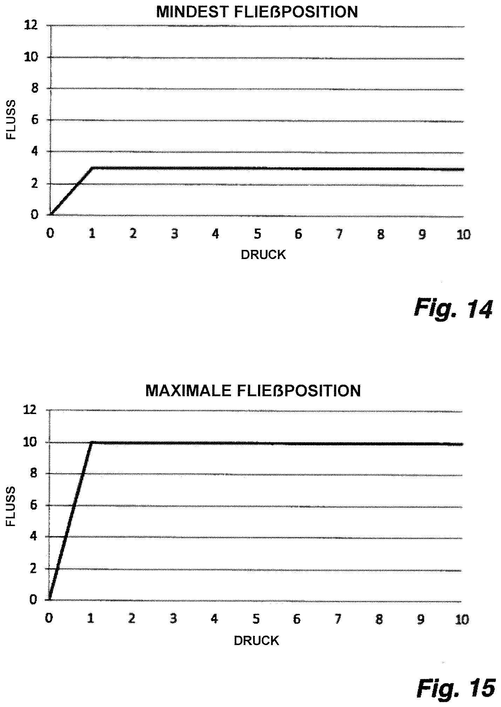

Durch die Verstellbarkeit des wenigstens einen Abstützelementes 7 gegenüber dem Grundkörper 2 kann nun erreicht werden, dass bei der Situation gemäß Figur 3 die Regelkurve gemäß Figur 15 erreicht wird, während die Stellung gemäß Figur 4 eine Regelkurve gemäß Figur 14 ergibt. Deutlich ist jeweils der Arbeitsbereich des Durchflussmengenreglers erkennbar, in dem die Regelkurve (näherungsweise) horizontal verläuft und in denen jeweils unterschiedliche Durchflussmengen erreicht sind.

Das Abstützelement 7 ist durch ein Führungsloch 12 im Grundkörper 3 gesteckt und wird durch das Führungsloch 12 geführt. Durch die Ausrichtung des Führungslochs 12 ergibt sich eine Beweglichkeit des Abstützelements transversal oder quer zum Grundkörper 3 und insbesondere zur Anströmseite 8. Somit lässt sich das Abstützelement 7 einfach in den Steuerspalt 4, der in etwa parallel zu der Anströmseite 8 verläuft, hinein und aus diesem herausfahren.

Zur Festlegung der lichten Weite 6 ist das Abstützelement 7 teilweise im Steuerspalt 4 angeordnet und bildet so einen Auflagepunkt 13 für den Regelkörper 2.

Das Abstützelement ist zumindest in seinem Abschnitt, der in dem Steuerspalt 4 liegt, stiftförmig ausgebildet und weist einen zylindrischen Querschnitt auf.

An dem Grundkörper 3 ist auf der Anströmseite zusätzlich wenigstens ein Abstandhalter 15 ausgebildet, der ein vollflächiges Anliegen des Regelkörpers 2 an dem Grundkörper 3 verhindert. Der Abstandhalter 15 ist mit einer sehr geringen Höhe im Vergleich zu einer typischen oder minimalen Höhe des Abstützelements 7 ausgebildet und bildet somit einen niedrigen Auflagepunkt 14 über dem Grundkörper 3.

An dem Grundkörper 3 ist außerdem ein Trägerelement 16 ausgebildet, das ebenfalls von der Anströmseite 8 abragt. Der Regelkörper 2 ist hier an einem freien Ende 17 des Trägerelements 16 befestigt und auf einer umlaufenden Schulter 18 abdichtend abgelegt. Diese Schulter 18 bildet einen weiteren Auflagepunkt 19 für den Regelkörper 2.

Das Trägerelement 16 durchgreift den Regelkörper 2 zentral, sodass der Regelkörper 2 mittig auf dem Trägerelement 16 angeordnet ist. Hierzu ist an dem Regelkörper 2 eine Zentralöffnung 35 ausgebildet, die das Trägerelement 16 aufnimmt.

Das wenigstens eine Abstützelement 7 ist mittels eines Antriebs 20 in Bezug auf den Grundkörper 3 verstellbar. Hierzu weist der Antrieb 20 ein Stellgewinde 21 auf, das über ein von außen zugängliches Betätigungselement 22 betätigbar ist.

Das Abstützelement 7 ist hierbei durch das Führungsloch 12 in dem Grundkörper 3 auf die Abströmseite 23 geführt. Auf der Abströmseite 23 ist auch der bereits erwähnte Antrieb 20 ausgebildet. Hierdurch ist das Trägerelement 16 mit dem Abstützelement 7 drehfest in dem Grundkörper 3 gehalten.

Somit erzwingt eine Drehung an dem Betätigungselement 21 einen Vortrieb des Abstützelements 7 relativ zu dem Grundkörper 3. Dies bewirkt, dass die lichte Weite 6 des Steuerspaltes 4 vergrößert oder verkleinert wird, je nach Drehsinn am Betätigungselement.

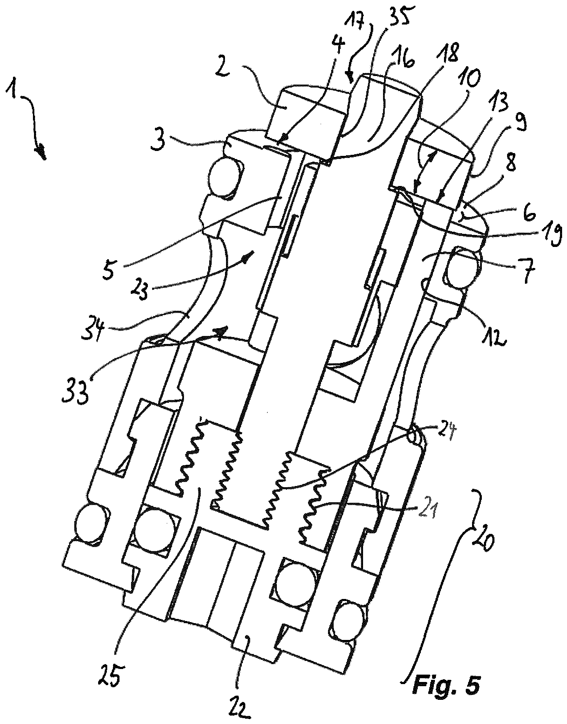

Die Figur 5 zeigt ein weiteres erfindungsgemäßes Ausführungsbeispiel. Konstruktiv und/oder funktionell zu dem vorausgehenden Ausführungsbeispiel gleichartige oder identische Bauteile und Funktionseinheiten sind mit denselben Bezugszeichen bezeichnet und nicht gesondert beschrieben. Die Ausführungen zu den Figuren 1 bis 4 gelten daher zu der Figur 5 entsprechend.

Das Ausführungsbeispiel gemäß der Figur 5 unterscheidet sich von den vorangegangenen Ausführungsbeispielen durch die Ausgestaltung des Trägerelements 16.

Das Trägerelement 16 ist hier in noch genauer zu beschreibender Weise relativ zu dem Grundkörper 3 verfahrbar. Durch ein Verstellen des Trägerelements 16 ist somit der Regelkörper 2 von dem Grundkörper 3 entfernbar oder an diesen annäherbar. Dies bewirkt, dass das Trägerelement 16 auch in Bezug auf das wenigstens eine Abstützelement 7 verstellbar ist.

Zur Verstellbarkeit ist koaxial zu dem bereits beschriebenen Stellgewinde 21 ein weiteres Stellgewinde 24 ausgebildet, mit welchem das Trägerelement 16 antreibbar ist.

Beide Stellgewinde 21, 24 sind mit demselben Betätigungselement 22 verbunden, wodurch eine Koppeleinrichtung 25 zwischen den Bewegungen des Abstützelements 7 und des Trägerelements 16 eingerichtet ist. Je nach Steigung und Drehsinn der Stellgewinde 21, 24 ergibt sich eine gleichsinnige Verstellbewegung, gegebenenfalls mit unterschiedlichen Verstellraten in Abhängigkeit von einer jeweiligen Steigung der Stellgewinde 21, 24, oder eine gegenläufige Verstellbewegung, jeweils bei einem gemeinsamen Antrieb über das Betätigungselement 22.

Im abgebildeten Ausführungsbeispiel ist das Stellgewinde 24 feiner als das Stellgewinde 21, sodass eine erste Verstellrate des wenigstens einen Abstützelements 7, die sich bei einem Drehen des Betätigungselements 22 ergibt, größer ist als eine zweite Verstellrate des Trägerelements 16, die sich - vermittelt durch die Koppeleinrichtung 25 - bei derselben Drehung des Betätigungselements 22 ergibt. Im vorliegenden Fall ist die erste Verstellrate sogar doppelt so groß wie die zweite Verstellrate.

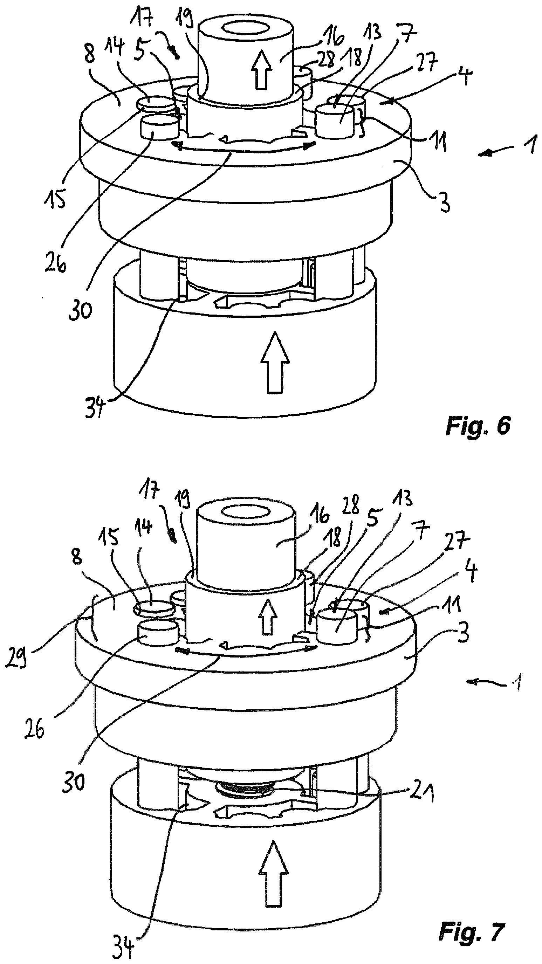

Die Figuren 6 bis 8 zeigen einen weiteren erfindungsgemäßen Durchflussmengenregler 1. Wieder sind gleichartige oder identische Bauteile und Funktionseinheiten mit denselben Bezugszeichen bezeichnet und nicht noch einmal gesondert beschrieben. Die bisherigen Ausführungen zu den Figuren 1 bis 5 gelten daher zu den Figuren 6 bis 8 entsprechend.

Figur 6 zeigt den Fall einer gemeinsamen Verstellrate des Abstützelements 7 und des Trägerelements 16. Dies ergibt sich beispielsweise, wenn die Stellgewinde 21, 24 an der Koppeleinrichtung 25 eine übereinstimmende Steigung und einen übereinstimmenden Drehsinn aufweisen.

Figur 7 zeigt den Fall, dass nur das Trägerelement 16 an das Betätigungselement 22 angekoppelt ist. Das Abstützelement 7 kann hierbei separat antreibbar oder über eine sehr feine Steigung des Stellgewindes 21 angekoppelt sein. Im letzteren Fall bewegt sich das Abstützelement 7 nur unwesentlich.

Figur 7 kann sich ferner ergeben, wenn die Drehsinne der Stellgewinde 21, 24 gegensinnig sind. Dann wird das Abstützelement 7 in den Grundkörper 3 eingezogen, wenn das Trägerelement 16 ausgefahren wird.

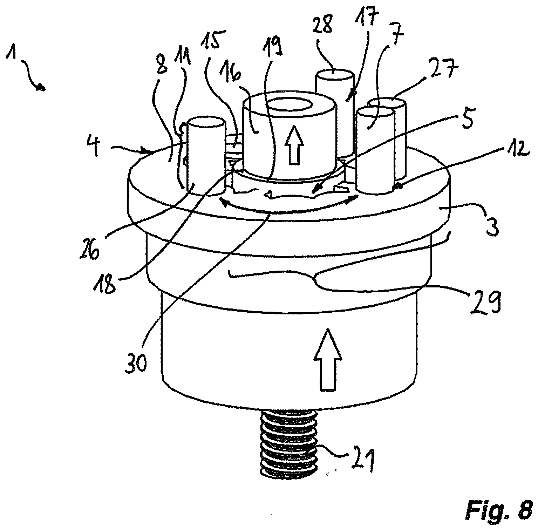

Figur 8 zeigt den umgekehrten Fall. Hier wird nur das Abstützelement 7 bewegt, während das Trägerelement 16 unbeweglich bleibt, oder es wird das Abstützelement 7 gegenläufig zu dem Trägerelement 16 bewegt, also eingezogen, wenn das Trägerelement 16 ausgefahren wird, und umgekehrt.

In den Figuren 6 bis 8 ist noch erkennbar, dass mehrere weitere Abstützelemente 26, 27, 28 ausgebildet sind, die entlang des Umfangs des Regelkörpers 2 eine Abfolge 29 von Abstützelementen 7, 26, 27, 28 bilden. Die Abstützelemente 7, 26, 27, 28 sind entlang des Umfangs des Regelkörpers 2 ungleichmäßig verteilt, so dass die Paare von benachbarten Abstützelementen 7, 26, 27, 28 jeweils unterschiedliche Abstände 30 zwischen sich einschließen. Beispielsweise ist der Abstand 30 zwischen den Abstützelementen 7 und 26 groß, so dass der Regelkörper 2 hier weich ist. Dieser Abschnitt bestimmt daher das Verhalten bei niedrigen Drücken. Der Abstand zwischen den Abstützelementen 7 und 27 ist dagegen klein, so dass der Regelkörper 2 hier steif ist. Somit bestimmt dieser Abstand die Regelkurve bei großen Drücken. Insgesamt ergibt sich durch diese Aufteilung eine Regelkurve, die schon bei vergleichsweise kleinen Drücken das Plateau erreicht.

Die Abstützelemente 7, 26, 27, 28 können, wie in Figur 5 gezeigt, miteinander derart gekoppelt sein, dass sie sich gleichläufig und mit übereinstimmenden Verstellraten verstellen lassen.

Bei weiteren Ausführungsbeispielen sind die Abstützelemente 7, 26, 27, 28 mit einer individuellen Koppeleinrichtung 25 versehen, können aber auch individuell beweglich und somit einzeln verstellbar sein.

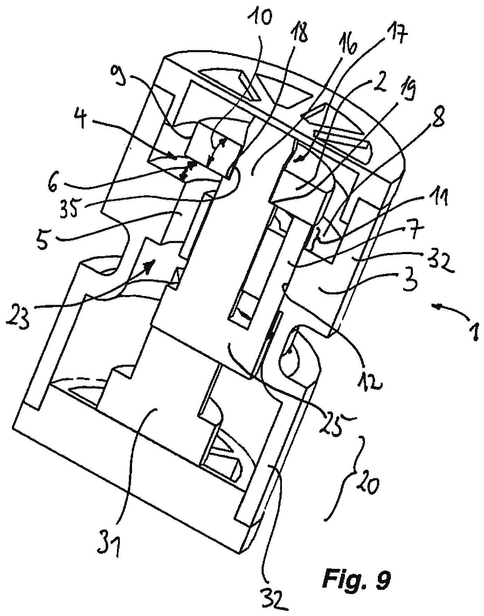

Die Figur 9 zeigt ein weiteres erfindungsgemäßes Ausführungsbeispiel. Konstruktiv und/oder funktionell zu dem vorausgehenden Ausführungsbeispiel gleichartige oder identische Bauteile und Funktionseinheiten sind mit denselben Bezugszeichen bezeichnet und nicht gesondert beschrieben. Die Ausführungen zu den Figuren 1 bis 8 gelten daher zu Figur 9 entsprechend.

Das Ausführungsbeispiel gemäß Figur 9 unterscheidet sich von den vorangegangenen Ausführungsbeispielen durch die Ausgestaltung des Antriebs 20.

In dem vorliegenden Ausführungsbeispiel ist der Antrieb 20 als thermisch antreibbarer Antrieb 31 ausgestaltet, der von dem vorbeiströmenden Wasser umströmt wird und dessen Ausdehnung in Längsrichtung temperaturabhängig ist. Dies kann beispielsweise dadurch erreicht sein, dass der thermisch antreibbare Antrieb 31 mit einem temperaturempfindlichen Wachs gefüllt ist, das ein charakteristisches Ausdehnungsverhalten in Abhängigkeit von der Temperatur zeigt.

Der Antrieb 20 kann bei weiteren Ausführungsbeispielen auch als Elektromotor oder auf sonstige Weise ausgebildet sein.

In jeden Fall bewirkt der Antrieb 20, dass das Trägerelement 16 gemeinsam mit dem wenigstens einen Abstützelement 7 und insbesondere mit allen vorhandenen Abstützelementen 7, 26, 27, 28 in dem Grundkörper 2 verschiebbar ist. Gegebenenfalls sind zu einer Rückholbewegung entsprechende Federelemente vorgesehen, die nicht weiter dargestellt sind.

In den Schnittdarstellungen ist erkennbar, dass bei den Ausführungsbeispielen das Trägerelement 18 und die beweglichen Abstützelemente 7, 26, 27, 28 durch den Grundkörper 3 hindurchgeführt sind und an einer Abströmseite 23 heraustreten. Der bereits erwähnte Abtrieb 20 ist ebenfalls an dieser Abströmseite 23 des Grundkörpers 3 angeordnet.

In dem Ausführungsbeispiel gemäß Figur 9 bewirkt die Koppeleinrichtung 25, dass sich die Abstützelemente 7, 26, 27, 28 (nicht dargestellt) synchron untereinander und mit dem Trägerelement 16 bewegen.

Der Grundkörper 3 ist in einem Rohr 32, das die Außenabmessungen des Durchflussmengenreglers 1 definiert, angeordnet und mit diesem Rohr 32 einstückig verbunden. Bei weiteren Ausführungsbeispielen kann der Grundkörper 3 auf separat von dem Rohr 32 ausgebildet sein. Das Rohr 32 kann nun in ein weiteres Rohr eingesetzt werden, sodass der Grundkörper 3 auch in diesem weiteren Rohr angeordnet ist.

In dem Rohr 32 ist bei den Ausführungsbeispielen gemäß Figur 1 bis 4 und gemäß Figur 5 hinter der Abströmseite 23 eine Biegung 33 für die Wasserströmung ausgebildet, sodass der Wasserstrom an einem seitlich angeordneten Austritt 34 austreten kann.

Bei den Ausführungsbeispielen gemäß Figur 6 bis 8 und gemäß Figur 9 tritt dagegen der Wasserstrom ohne Biegung geradlinig durch den Durchflussmengenregler hindurch.

Der Durchflussmengenregler 1 kann beispielsweise dafür verwendet werden, eine Durchflussmenge eines Wasserstroms variabel einstellen zu können. Dies lässt sich beispielsweise nutzen, um eine gewünschte Mischtemperatur durch Mischung eines Warmwasserstroms und eines Kaltwasserstroms zu erreichen, wobei die Durchflussmenge des Warmwasserstroms und/oder des Kaltwasserstroms mit dem erfindungsgemäßen Durchflussmengenregler 1 einstellbar ist.

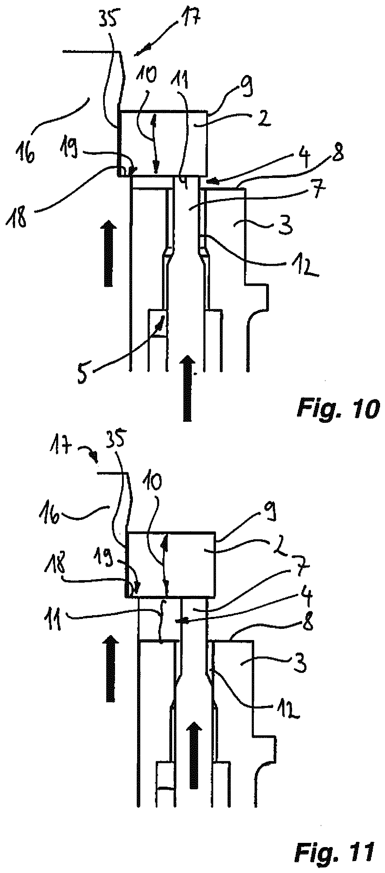

Die Figuren 10 bis 11 zeigen Details eines weiteren erfindungsgemäßen Ausführungsbeispiels. Konstruktiv und/oder funktionell zu dem vorausgehenden Ausführungsbeispiel gleichartige oder identische Bauteile und Funktionseinheiten sind mit denselben Bezugszeichen bezeichnet und nicht gesondert beschrieben. Die Ausführungen zu den Figuren 1 bis 9 gelten daher zu den Figuren 10 bis 11 entsprechend.

In Figur 10 ist ersichtlich, dass das stiftförmige Abstützelement 7 mit zwei Durchmessern ausgestaltbar ist, wobei das gestufte Führungsloch 12 ebenso korrespondierend zwei Durchmesser aufweist. In der Stellung gemäß Figur 10 ist somit das Führungsloch 12 geöffnet und kann als Abflussöffnung 5 dienen.

In der Situation gemäß Figur 11, also mit aus dem Grundkörper 3 herausgefahrenem Abstützelement 7, ist dagegen das Führungsloch 12 verschlossen. Hierzu ist der größere Durchmesser des Abstützelements 7 auf den kleineren Durchmesser des Führungslochs 12 abgestimmt.

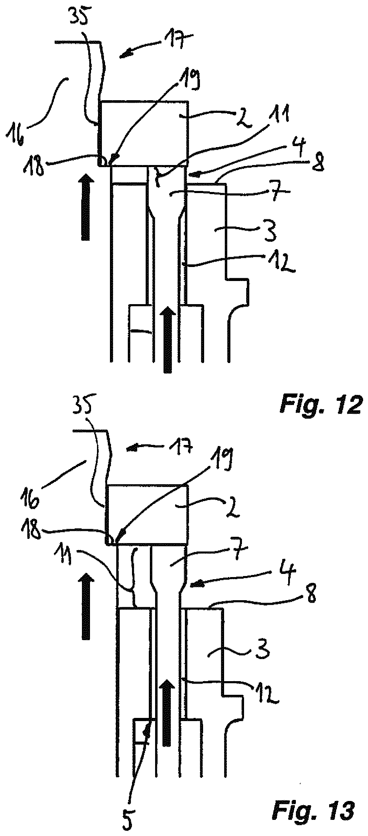

Die Figuren 12 und 13 zeigen eine Alternative zu den Figuren 10 und 11. Funktionell und/oder konstruktiv gleichartige oder identische Bauteile und Funktionseinheiten sind wieder mit denselben Bezugszeichen bezeichnet und nicht noch einmal gesondert beschrieben. Die Ausführungen zu den Figuren 1 bis 11 gelten daher zu den Figuren 12 und 13 entsprechend.

Das Ausführungsbeispiel gemäß den Figuren 12 und 13 unterscheidet sich von dem Ausführungsbeispiel gemäß den Figuren 10 und 11 dadurch, dass das Führungsloch 12 mit einem einheitlichen Durchmesser ausgebildet ist. Das wenigstens eine Abstützelement 7 ist dagegen weiterhin mit zwei Durchmessern ausgebildet, wobei der größere Durchmesser auf den Durchmesser des Führungslochs 12 abgestimmt ist. Somit lässt sich das Führungsloch 12 in der Situation gemäß Figur 12, also mit eingefahrenem Abstützelement 7 verschließen, während es in Figur 13, also mit ausgefahrenem Abstützelement 7, geöffnet ist und eine Abflussöffnung 5 bildet.

Sind keine weiteren Abflussöffnungen 5 in dem Grundkörper 3 ausgebildet, so kann somit der Durchflussmengenregler 1 als reines Sperrventil verwendet werden.

Ist eine zusätzliche Abflussöffnung 5 - beispielsweise in der Nähe des Trägerelements 16 - ausgebildet, so kann der Durchflussmengenregler 1 in der beschriebenen Weise zu Regelung eines im Arbeitsbereich konstante Durchflussmenge dienen. Die Führungslöcher 12 können in diesem Fall Beipässe darstellen, um einen nochmal erhöhten Abfluss zu erreichen.

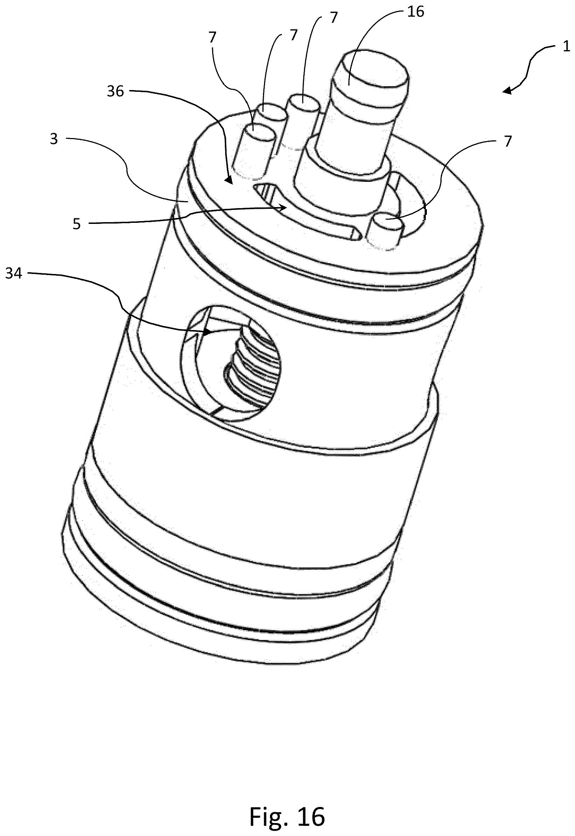

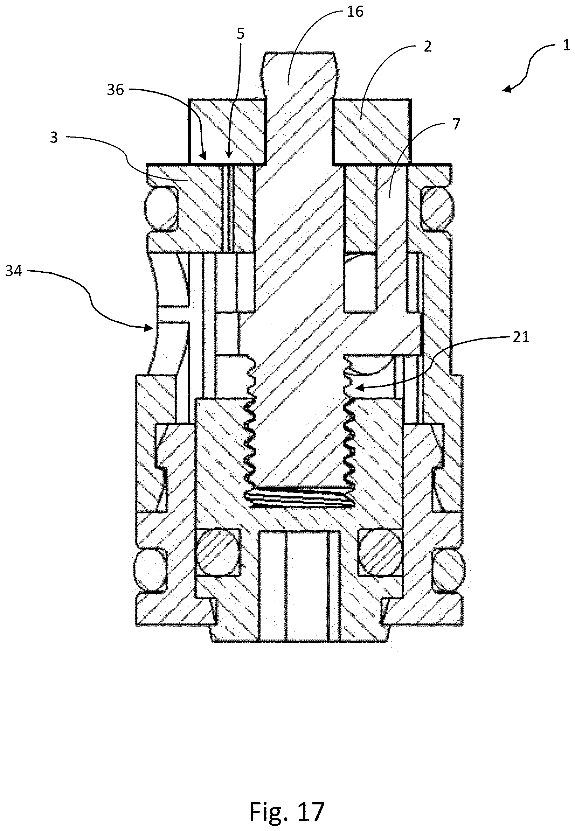

Die Figuren 16 und 17 zeigen einen weiteren erfindungsgemäßen Durchflussmengenregler 1. Wieder sind gleichartige oder identische Bauteile und Funktionseinheiten mit denselben Bezugszeichen bezeichnet und nicht noch einmal gesondert beschrieben. Die bisherigen Ausführungen zu den Figuren 1 bis 15 gelten daher zu den Figuren 16 und 17 entsprechend.

Das Ausführungsbeispiel gemäß den Figuren 16 und 17 unterscheidet sich von den vorgegangenen Ausführungsbeispielen dadurch, dass das Abstützelement 7 in eine in Figur 17 gezeigte Position 7 bewegbar ist, in welcher der Regelkörper 2 die Abflussöffnung 5 vollständig verschließt. Dies wird im Ausführungsbeispiel dadurch erreicht, dass auf die zuvor beschriebenen Abstandhalter 15 verzichtet wird, so dass der Regelkörper 2 flächig an dem in einem Auflagebereich 36 eben ausgebildeten Grundkörper 3 anliegt. Es ist somit eine Stopp- und/oder Verschlussfunktion realisiert, die eine kontinuierliche Einstellung der Durchflussmenge von einem von Null verschiedenen Wert auf den Wert Null ermöglicht.

Hierbei kann vorgesehen sein, dass - wie im Beispiel gezeigt - das wenigstens eine Abstützelement 7 vollständig in den Grundkörper 3 versenkt werden kann.

Auch bei den zuvor beschriebenen Ausführungsbeispielen können die Abstandshalter 15 jeweils weggelassen werden, um eine Stopp- und/oder Verschlussfunktion zu erreichen.

Bei dem Durchflussmengenregler 1 wird somit vorgeschlagen, eine lichte Weite 6 eines Steuerspalts 4, der zwischen einem Regelkörper 2 und einem Grundkörper 3 ausgebildet ist, wobei der Regelkörper 2 druckabhängig verformbar ist, um eine konstante Durchflussmenge durch den Steuerspalt 4 einzustellen, eine Verstellbarkeit der lichten Weite 6 dadurch einzurichten, dass wenigstens ein Abstützelement 7, welches die lichte Weite 6 des Steuerspalts 4 einstellt, relativ zu einem Grundkörper 3 beweglich ausgebildet ist.

### Bezugszeichenliste

- 1: Durchflussmengenregler
- 2: Regelkörper
- 3: Grundkörper
- 4: Steuerspalt
- 5: Abflussöffnung
- 6: lichte Weite
- 7: Abstützelement
- 8: Anströmseite
- 9: Außenkontur
- 10: Dicke
- 11: Überstand
- 12: Führungsloch
- 13: Auflagepunkt
- 14: Auflagepunkt
- 15: Abstandhalter
- 16: Trägerelement
- 17: freies Ende
- 18: Schulter
- 19: Auflagepunkt
- 20: Antrieb
- 21: (erstes) Stellgewinde
- 22: Betätigungselement
- 23: Abströmseite
- 24: zweites Stellgewinde
- 25: Koppeleinrichtung
- 26: Abstützelement
- 27: Abstützelement
- 28: Abstützelement
- 29: Abfolge
- 30: Abstand
- 31: thermisch antreibbarer Antrieb
- 32: Rohr
- 33: Biegung
- 34: Austritt
- 35: Zentralöffnung
- 36: Auflagebereich

## Patentansprüche

1. Durchflussmengenregler (1), mit einem scheibenförmigen, deformierbaren Regelkörper (2), der anströmseitig zu einem Grundkörper (3) angeordnet ist, so dass zwischen dem Regelkörper (2) und dem Grundkörper (3) ein Steuerspalt (4) gebildet ist, wobei in der Grundkörper (3) wenigstens eine, dem Steuerspalt (4) nachgeschaltete Abflussöffnung (5) ausgebildet ist, wobei eine lichte Weite (6) des Steuerspalts (4) zumindest im Betrieb durch wenigstens ein Abstützelement (7) vorgegeben ist, wobei der Regelkörper (2) an einem Trägerelement (16) befestigt ist, **dadurch gekennzeichnet, dass** das wenigstens eine Abstützelement (7) relativ zu dem Grundkörper (3) beweglich angeordnet ist.

2. Durchflussmengenregler (1) nach Anspruch 1, **dadurch gekennzeichnet, dass** das Abstützelement (7) relativ zu dem Grundkörper (3) in eine Position bewegbar ist, in welcher der Regelkörper (2) die Abflussöffnung (5) verschließt und/oder flächig an dem Grundkörper (3), insbesondere an einem vorzugsweise eben ausgebildeten Auflagebereich (36) des Grundkörpers (3), anliegt.

3. Durchflussmengenregler (1) nach Anspruch 1 oder 2, **dadurch gekennzeichnet, dass** der Grundkörper (3) auf einer den Steuerspalt (4) begrenzenden Anströmseite (8) im Wesentlichen eben ausgebildet ist.

4. Durchflussmengenregler (1) nach einem der vorangehenden Ansprüche, **dadurch gekennzeichnet, dass** der Regelkörper (2) eine Außenkontur (9) einer Kreisscheibe und/oder eine einheitliche Dicke (10) aufweist.

5. Durchflussmengenregler (1) nach einem der vorangehenden Ansprüche, **dadurch gekennzeichnet, dass** durch ein Bewegen des wenigstens einen Abstützelements (7) die lichte Weite (6) des Steuerspaltes (4) veränderlich ist und/oder dass das wenigstens eine Abstützelement (7) in dem Grundkörper (3) geführt ist, vorzugsweise transversal zu der oder einer dem Steuerspalt (4) zugewandten Seite des Grundkörpers (3).

6. Durchflussmengenregler (1) nach einem der vorangehenden Ansprüche, **dadurch gekennzeichnet, dass** das wenigstens eine Abstützelement (7) stiftförmig ausgebildet ist.

7. Durchflussmengenregler (1) nach einem der vorangehenden Ansprüche, **dadurch gekennzeichnet, dass** das wenigstens eine Abstützelement (7) einen kleineren Durchmesser und einen größeren Durchmesser aufweist, insbesondere wobei ein Führungsloch (12), in dem das wenigstens eine Abstützelement (7) beweglich angeordnet ist, in einer ersten Position des Abstützelements (7) durch den größeren Durchmesser verschlossen und in einer zweiten Position des Abstützelements (7) durch den kleineren Durchmesser zumindest teilweise freigegeben ist.

8. Durchflussmengenregler (1) nach einem der vorangehenden Ansprüche, **dadurch gekennzeichnet, dass** das wenigstens eine Abstützelement (7) zumindest teilweise in dem Steuerspalt (4) angeordnet ist.

9. Durchflussmengenregler (1) nach einem der vorangehenden Ansprüche, **dadurch gekennzeichnet, dass** an dem Grundkörper (3) wenigstens ein unbeweglicher, in den Steuerspalt (4) ragender Abstandhalter (15) angeordnet ist, insbesondere wobei ein Maß, mit welchem der wenigstens eine Abstandhalter (15) in den Steuerspalt (4) ragt, kleiner ist als ein kleinstes Maß, mit welcher das wenigstens eine Abstützelement (7) in den Steuerspalt (4) ragt.

10. Durchflussmengenregler (1) nach einem der vorangehenden Ansprüche, **dadurch gekennzeichnet, dass** der Regelkörper (2) an dem Trägerelement (16) abdichtend und/oder mittig befestigt ist und/oder dass das Trägerelement (16) relativ zu dem Grundkörper (3) und/oder zu dem wenigstens einen Abstützelement (7) beweglich angeordnet ist.

11. Durchflussmengenregler (1) nach einem der vorangehenden Ansprüche, **dadurch gekennzeichnet, dass** das Abstützelement (7) den Regelkörper (2) trägt.

12. Durchflussmengenregler (1) nach einem der vorangehenden Ansprüche, **dadurch gekennzeichnet, dass** eine Koppeleinrichtung (25) zu einem gegenläufigen oder gleichläufigen Bewegen des Trägerelements (16) zu dem wenigstens einen Abstützelement (7) eingerichtet ist.

13. Durchflussmengenregler (1) nach einem der vorangehenden Ansprüche, **dadurch gekennzeichnet, dass** die oder eine Koppeleinrichtung (25) eine erste Verstellrate des wenigstens einen Abstützelements (7) und eine zweite Verstellrate des Trägerelements (16) bewirkt, insbesondere wobei die erste Verstellrate größer als die zweite Verstellrate, insbesondere wenigstens doppelt so groß wie die zweite Verstellrate, oder wobei die erste Verstellrate kleiner als die zweite Verstellrate, insbesondere höchstens halb so groß wie die zweite Verstellrate, ist.

14. Durchflussmengenregler (1) nach einem der vorangehenden Ansprüche, **dadurch gekennzeichnet, dass** das wenigstens eine Abstützelement (7) und/oder das Trägerelement (16) mit einem vorzugsweise mechanisch, elektrisch und/oder thermisch antreibbaren Antrieb (31) relativ zu dem Grundkörper (3) beweglich sind.

15. Durchflussmengenregler (1) nach einem der vorangehenden Ansprüche, **dadurch gekennzeichnet, dass** das wenigstens eine Abstützelement (7) und/oder das Trägerelement (16) durch den Grundkörper (3) auf eine Abströmseite (8) geführt ist/sind und/oder dass der Antrieb (20) abströmseitig angeordnet ist.

16. Durchflussmengenregler (1) nach einem der vorangehenden Ansprüche, **dadurch gekennzeichnet, dass** das wenigstens eine Abstützelement (7) zu einer Abfolge von vorzugsweise in einer Umfangsrichtung des Regelkörpers (2) angeordneten Abstützelementen (7) gehört, insbesondere wobei die Abfolge wenigstens zwei voneinander verschiedene Abstände zwischen benachbarten Abstützelementen aufweist.

17. Durchflussmengenregler (1) nach einem der vorangehenden Ansprüche, **dadurch gekennzeichnet, dass** die Abstützelemente (7, 26, 27, 28) der Abfolge entlang der Umfangsrichtung ungleichmäßig angeordnet sind.

18. Durchflussmengenregler (1) nach einem der vorangehenden Ansprüche, **dadurch gekennzeichnet, dass** die Abstützelemente (7, 26, 27, 28) der Abfolge zu einem synchronen Bewegen relativ zu der Grundplatte miteinander gekoppelt oder koppelbar sind und/oder dass die Abstützelemente (7, 26, 27, 28) der Abfolge individuell beweglich angeordnet sind.

19. Durchflussmengenregler (1) nach einem der vorangehenden Ansprüche, **dadurch gekennzeichnet, dass** eine Wasserströmung im Grundkörper (3) in einer Biegung (33) geführt ist, insbesondere wobei der Antrieb in einer Verlängerung eines einlaufenden Arms der Biegung (33) außerhalb der Wasserströmung angeordnet ist.

20. Durchflussmengenregler (1) nach einem der vorangehenden Ansprüche, **dadurch gekennzeichnet, dass** der Grundkörper (3) vorzugsweise fest in einem Rohr (32) mit auf den Grundkörper (3) abgestimmtem Innendurchmesser angeordnet ist.

21. Verwendung eines Durchflussmengenreglers (1) nach einem der vorangehenden Ansprüche zu einem Einstellen einer Durchflussmenge, vorzugsweise einer Mischtemperatur, insbesondere eines Mischverhältnisses, eines Gemischs aus Kalt- und Warmwasser, im Betrieb, insbesondere über den oder einen von außen betätigbaren Antrieb für die Relativbewegung zwischen dem wenigstens einen Abstützelement (7) und dem Grundkörper (3).

## Claims

1. Flow rate regulator (1) having a disc-like, deformable regulating body (2) which is arranged on the inflow side with respect to a main body (3) such that a control gap (4) is formed between the regulating body (2) and the main body (3), wherein at least one drain opening (5), arranged downstream of the control gap (4), is formed in the main body (3), wherein a clear width (6) of the control gap (4) is defined, at least during operation, by at least one support element (7), wherein the regulating body (2) is fastened to a carrier element (16), **characterized in that** the at least one support element (7) is arranged in a movable manner relative to the main body (3).

2. Flow rate regulator (1) according to Claim 1, **characterized in that** the support element (7) is movable relative to the main body (3) into a position in which the regulating body (2) closes the drain opening (5) and/or bears flat against the main body (3), in particular against a bearing region (36), formed preferably in a planar manner, of the main body (3).

3. Flow rate regulator (1) according to Claim 1 or 2, **characterized in that** the main body (3) is formed in a substantially planar manner on an inflow side (8) delimiting the control gap (4).

4. Flow rate regulator (1) according to one of the preceding claims, **characterized in that** the regulating body (2) has an external contour (9) of a circular disc and/or a uniform thickness (10).

5. Flow rate regulator (1) according to one of the preceding claims, **characterized in that** the clear width (6) of the control gap (4) is variable as a result of the at least one support element (7) being moved, and/or **in that** the at least one support element (7) is guided in the main body (3), preferably transversely to the or a side, facing the control gap (4), of the main body (3).

6. Flow rate regulator (1) according to one of the preceding claims, **characterized in that** the at least one support element (7) is formed in a peg-like manner.

7. Flow rate regulator (1) according to one of the preceding claims, **characterized in that** the at least one support element (7) has a smaller diameter and a larger diameter, in particular wherein a guide hole (12), in which the at least one support element (7) is arranged in a movable manner, is closed by the larger diameter in a first position of the support element (7) and is at least partially freed up by the smaller diameter in a second position of the support element (7).

8. Flow rate regulator (1) according to one of the preceding claims, **characterized in that** the at least one support element (7) is arranged at least partially in the control gap (4).

9. Flow rate regulator (1) according to one of the preceding claims, **characterized in that** at least one immovable spacer (15), which projects into the control gap (4), is arranged on the main body (3), in particular wherein an extent to which the at least one spacer (15) projects into the control gap (4) is less than a smallest extent to which the at least one support element (7) projects into the control gap (4).

10. Flow rate regulator (1) according to one of the preceding claims, **characterized in that** the regulating body (2) is fastened to the carrier element (16) in a sealing and/or central manner, and/or **in that** the carrier element (16) is arranged in a movable manner relative to the main body (3) and/or to the at least one support element (7).

11. Flow rate regulator (1) according to one of the preceding claims, **characterized in that** the support element (7) carries the regulating body (2) .

12. Flow rate regulator (1) according to one of the preceding claims, **characterized in that** a coupling device (25) is set up to move the carrier element (16) in the opposite direction to or in the same direction as the at least one support element (7).

13. Flow rate regulator (1) according to one of the preceding claims, **characterized in that** the or a coupling device (25) effects a first adjustment rate of the at least one support element (7) and a second adjustment rate of the carrier element (16), in particular wherein the first adjustment rate is greater than the second adjustment rate, in particular at least twice the second adjustment rate, or wherein the first adjustment rate is less than the second adjustment rate, in particular at most half the second adjustment rate.

14. Flow rate regulator (1) according to one of the preceding claims, **characterized in that** the at least one support element (7) and/or the carrier element (16) is/are movable relative to the main body (3) by way of a preferably mechanically, electrically and/or thermally drivable drive (31).

15. Flow rate regulator (1) according to one of the preceding claims, **characterized in that** the at least one support element (7) and/or the carrier element (16) is/are guided onto an outflow side (8) by the main body (3), and/or **in that** the drive (20) is arranged on the outflow side.

16. Flow rate regulator (1) according to one of the preceding claims, **characterized in that** the at least one support element (7) belongs to a series of support elements (7) that are arranged preferably in a circumferential direction of the regulating body (2), in particular wherein the series has at least two spacings that are different from one another between adjacent support elements.

17. Flow rate regulator (1) according to one of the preceding claims, **characterized in that** the support elements (7, 26, 27, 28) of the series are arranged in a non-uniform manner in the circumferential direction.

18. Flow rate regulator (1) according to one of the preceding claims, **characterized in that** the support elements (7, 26, 27, 28) of the series are coupled or couplable together so as to move synchronously relative to the base plate, and/or in that the support elements (7, 26, 27, 28) of the series are arranged so as to be movable individually.

19. Flow rate regulator (1) according to one of the preceding claims, **characterized in that** a flow of water in the main body (3) is guided in a bend (33), in particular wherein the drive is arranged in an extension of an entering arm of the bend (33) away from the flow of water.

20. Flow rate regulator (1) according to one of the preceding claims, **characterized in that** the main body (3) is arranged preferably fixedly in a pipe (32) with an inside diameter adapted to the main body (3).

21. Use of a flow rate regulator (1) according to one of the preceding claims to set a flow rate, preferably a mixing temperature, in particular a mixing ratio, of a mixture of cold and hot water, during operation, in particular via the or an externally actuable drive for the relative movement between the at least one support element (7) and the main body (3).

## Revendications

1. Régulateur de débit (1), avec un corps de réglage déformable (2) en forme de disque, qui est disposé en amont par rapport à un corps de base (3), de telle manière qu'une fente de commande (4) soit formée entre le corps de réglage (2) et le corps de base (3), dans lequel au moins une ouverture d'écoulement (5) est formée dans le corps de base (3) à la suite de la fente de commande (4), dans lequel une largeur libre (6) de la fente de commande (4) est au moins en service, prédéterminée par au moins un élément d'appui (7), dans lequel le corps de réglage (2) est fixé à un élément de support (16), **caractérisé en ce que** ledit au moins un élément d'appui (7) est disposé de façon mobile par rapport au corps de base (3).

2. Régulateur de débit (1) selon la revendication 1, **caractérisé en ce que** l'élément d'appui (7) peut être déplacé par rapport au corps de base (3) dans une position, dans laquelle le corps de réglage (2) ferme l'ouverture d'écoulement (5) et/ou s'applique à plat sur le corps de base (3), en particulier sur une zone d'appui (36) de préférence de forme plane du corps de base (3).

3. Régulateur de débit (1) selon la revendication 1 ou 2, **caractérisé en ce que** le corps de base (3) est de forme essentiellement plane sur un côté amont (8) limitant la fente de commande (4).

4. Régulateur de débit (1) selon l'une quelconque des revendications précédentes, **caractérisé en ce que** le corps de réglage (2) présente un contour extérieur (9) d'un disque circulaire et/ou une épaisseur uniforme (10).

5. Régulateur de débit (1) selon l'une quelconque des revendications précédentes, **caractérisé en ce que** la largeur libre (6) de la fente de commande (4) est variable par un mouvement dudit au moins un élément d'appui (7) et/ou **en ce que** ledit au moins un élément d'appui (7) est guidé dans le corps de base (3), de préférence transversalement au ou à un côté du corps de base (3) tourné vers la fente de commande (4).

6. Régulateur de débit (1) selon l'une quelconque des revendications précédentes, **caractérisé en ce que** ledit au moins un élément d'appui (7) est réalisé en forme de tige.

7. Régulateur de débit (1) selon l'une quelconque des revendications précédentes, **caractérisé en ce que** ledit au moins un élément d'appui (7) présente un diamètre plus petit et un diamètre plus grand, en particulier dans lequel un trou de guidage (12), dans lequel ledit au moins un élément d'appui (7) est disposé de façon mobile, est fermé par le plus grand diamètre dans une première position de l'élément d'appui (7) et est au moins en partie libéré par le plus petit diamètre dans une deuxième position de l'élément d'appui (7).

8. Régulateur de débit (1) selon l'une quelconque des revendications précédentes, **caractérisé en ce que** ledit au moins un élément d'appui (7) est disposé au moins en partie dans la fente de commande (4).

9. Régulateur de débit (1) selon l'une quelconque des revendications précédentes, **caractérisé en ce qu'**au moins un élément d'écartement immobile (15), saillant dans la fente de commande (4) est disposé sur le corps de base (3), en particulier dans lequel une mesure, avec laquelle ledit au moins un élément d'écartement (15) est saillant dans la fente de commande (4), est plus petite qu'une mesure la plus petite avec laquelle ledit au moins un élément d'appui (7) pénètre dans la fente de commande (4).

10. Régulateur de débit (1) selon l'une quelconque des revendications précédentes, **caractérisé en ce que** le corps de réglage (2) est fixé à l'élément de support (16) de façon étanche et/ou au centre et/ou **en ce que** l'élément de support (16) est disposé de façon mobile par rapport au corps de base (3) et/ou par rapport audit au moins un élément d'appui (7).

11. Régulateur de débit (1) selon l'une quelconque des revendications précédentes, **caractérisé en ce que** l'élément d'appui (7) porte le corps de réglage (2).

12. Régulateur de débit (1) selon l'une quelconque des revendications précédentes, **caractérisé en ce qu'**un dispositif de couplage (25) est conçu pour un mouvement de sens contraire ou de même sens de l'élément de support (16) par rapport audit au moins un élément d'appui (7).

13. Régulateur de débit (1) selon l'une quelconque des revendications précédentes, **caractérisé en ce que** le ou un dispositif de couplage (25) provoque une première vitesse de déplacement dudit au moins un élément d'appui (7) et une deuxième vitesse de déplacement de l'élément de support (16), en particulier dans lequel la première vitesse de déplacement est plus élevée que la deuxième vitesse de déplacement, en particulier est au moins deux fois plus élevée que la deuxième vitesse de déplacement, ou dans lequel la première vitesse de déplacement est moins élevée que la deuxième vitesse de déplacement, en particulier est au plus deux fois moins élevée que la deuxième vitesse de déplacement.

14. Régulateur de débit (1) selon l'une quelconque des revendications précédentes, **caractérisé en ce que** ledit au moins un élément d'appui (7) et/ou l'élément de support (16) est/sont mobile(s) par rapport au corps de base (3) au moyen d'un entraînement (31) à entraînement de préférence mécanique, électrique et/ou thermique.

15. Régulateur de débit (1) selon l'une quelconque des revendications précédentes, **caractérisé en ce que** ledit au moins un élément d'appui (7) et/ou l'élément de support (16) est/sont guidé(s) par le corps de base (3) sur un côté aval (8) et/ou **en ce que** l'entraînement (20) est disposé côté aval.

16. Régulateur de débit (1) selon l'une quelconque des revendications précédentes, **caractérisé en ce que** ledit au moins un élément d'appui (7) fait partie d'une série d'éléments d'appui (7) disposés de préférence dans une direction périphérique du corps de réglage (2), en particulier dans lequel la série présente au moins deux distances différentes l'une de l'autre entre des éléments d'appui voisins.

17. Régulateur de débit (1) selon l'une quelconque des revendications précédentes, **caractérisé en ce que** les éléments d'appui (7, 26, 27, 28) de la série sont disposés de façon irrégulière selon la direction périphérique.

18. Régulateur de débit (1) selon l'une quelconque des revendications précédentes, **caractérisé en ce que** les éléments d'appui (7, 26, 27, 28) de la série sont ou peuvent être couplés l'un à l'autre pour un mouvement synchrone par rapport à la plaque de base et/ou **en ce que** les éléments d'appui (7, 26, 27, 28) de la série sont disposés de façon mobile individuellement.

19. Régulateur de débit (1) selon l'une quelconque des revendications précédentes, **caractérisé en ce qu'**un écoulement d'eau dans le corps de base (3) est guidé dans un coude (33), en particulier dans lequel l'entraînement est disposé dans un prolongement d'un bras rentrant du coude (33) à l'extérieur de l'écoulement d'eau.

20. Régulateur de débit (1) selon l'une quelconque des revendications précédentes, **caractérisé en ce que** le corps de base (3) est de préférence disposé fixement dans un tube (32) avec un diamètre intérieur accordé au corps de base (3).

21. Utilisation d'un régulateur de débit (1) selon l'une quelconque des revendications précédentes pour un réglage d'un débit, de préférence d'une température de mélange, en particulier d'une proportion de mélange, d'un mélange d'eau froide et d'eau chaude, en service, en particulier par un ou l'entraînement actionnable de l'extérieur pour le mouvement relatif entre ledit au moins un élément d'appui (7) et le corps de base (3).
